(19)

Europäisches
Patentamt
European
Patent Office
Office européen
des brevets

(11) **EP 2 482 107 B1**

(12) **EUROPEAN PATENT SPECIFICATION**

(45) Date of publication and mention
of the grant of the patent:
**29.05.2013 Bulletin 2013/22**

(51) Int Cl.:
*G02B 6/036* (2006.01)     *G02B 6/02* (2006.01)
*G02B 6/028* (2006.01)

(21) Application number: **12150543.2**

(22) Date of filing: **10.01.2012**

(54) **Broad bandwidth multimode optical fiber with low bending losses**

Multimode Glasfaser mit großer Bandbreite und geringen Biegeverlusten

Fibre optique multimode à large bande passante et à faibles pertes par courbure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011 FR 1150734
01.02.2011 US 201161438372 P**

(43) Date of publication of application:
**01.08.2012 Bulletin 2012/31**

(73) Proprietor: **Draka Comteq B.V.
1083 HJ Amsterdam (NL)**

(72) Inventors:
• **Molin, Denis
91210 Draveil (FR)**

• **Bigot-Astruc, Marianne
91460 Marcoussis (FR)**
• **Sillard, Pierre
78150 Le Chesnay (FR)**
• **De Jongh, Koen
5694 Va Son En Breugel (NL)**
• **Gooijer, Frans
5627 ME EINDHOVEN (NL)**

(74) Representative: **Algemeen Octrooi- en
Merkenbureau
P.O. Box 645
5600 AP Eindhoven (NL)**

(56) References cited:
**EP-A1- 1 503 230        WO-A1-2009/054715
WO-A1-2009/062131**

**Description**

The present invention relates to the field of optical fibers, and, more specifically, to an optical fiber presenting reduced bending losses and a broad bandwidth for broadband applications.

An optical fiber (i.e. a glass fiber typically surrounded by one or more coating layers) conventionally comprises an optical fiber core (i.e., a central core) whichs transmits and/or amplifies an optical signal, and an optical cladding (or outer optical cladding) which confines the optical signal in the optical fiber core. Accordingly, the refractive index of the optical fiber core $n_c$ is typically greater than the refractive index of the outer optical cladding $n_g$ (i.e. $n_c > n_g$). The refractive index difference between the central core and the optical cladding is typically obtained by introducing dopants into the central core and/or the optical cladding.

Typically, the central core and the optical cladding of an optical fiber are obtained by vapor deposition, such as inside chemical vapor deposition (CVD), outside vapor deposition (OVD), vapor axial deposition (VAD), etc.. With an inside CVD type method, the outer optical cladding is constituted by the deposition tube and possibly also by overcladding or by sleeving. The central core is formed of a matrix optionally including doping elements. The central core matrix is generally made of silica.

The term "index profile" or "refractive index profile" designates the graph of the function plotting the refractive index as a function of the optical fiber's radius. Conventionally, the distance r from the optical fiber's center is plotted along the abscissa axis and the difference between the refractive index at a given distance from the optical fiber's center and the refractive index of the optical fiber's outer optical cladding is plotted up the ordinate axis.

Generally, the refractive index profile is described as a function of its appearance. Thus, the terms "step", "trapezoidal", "triangular", or "parabolic" (also referred to as a graded profile or an "alpha" profile) are used to describe graphs respectively presenting steps, trapezoidal, triangular, or parabolic shapes. These curves are representative of the ideal or design profile for the fiber, and fiber fabrication constraints may lead to a profile that is slightly different.

There are two main optical fiber types, viz. multimode optical fibers (or multimode fiber) and monomode optical fibers (or monomode or single mode fibers of SMF) In a multimode optical fiber, for a given wavelength, a plurality of optical modes propagate simultaneously along the optical fiber. In a single mode optical fiber, the fundamental mode is privileged and the higher-order modes are strongly attenuated.

The typical diameter of a single mode or multimode optical fiber is 125 micrometers ($\mu$m). The central core diameter of a multimode optical fiber is typically 50 $\mu$m or 62.5 $\mu$m, while the central core diameter of a single mode optical fiber is generally in the range 6 $\mu$m to 9 $\mu$m, approximately.

Multimode optical systems are less expensive than single mode optical systems since sources, connectors, and maintenance are less expensive for the former systems.

Multimode optical fibers are commonly used for short distance applications (i.e. local networks) and require a broad bandwidth. Multimode optical fibers are the subject of international standardization for compatibility requirements between optical fibers. The international standard is ITU-T standard G.651.1, which in particular defines criteria concerning bandwidth, numerical aperture, and the core diameter.

For an optical fiber to be used in broadband applications, a bandwidth as broad as possible is required. The bandwidth may be characterized in various ways for a given wavelength. Thus, a distinction is made between so-called overfilled launch (OFL) bandwidth and effective modal bandwidth (EMB).

Acquiring the OFL bandwidth requires the use of a light source presenting uniform excitation over the entire radial surface of the fiber, e.g. a laser diode or a light-emitting diode (LED).

Nevertheless, recently-developed light sources that are used in broadband applications, so-called vertical cavity surface emitting lasers (VCSELs) present excitation that is non-uniform over the radial surface of the fiber. For that type of light source, the OFL bandwidth is less pertinent, and it is preferred to use the EMB.

The calculated effective modal bandwidth (EMBc) estimates the minimum EMB of a multimode optical fiber regardless of the VCSEL diode used. It is obtained in a known manner from a measurement of the dispersion mode delay (DMD).

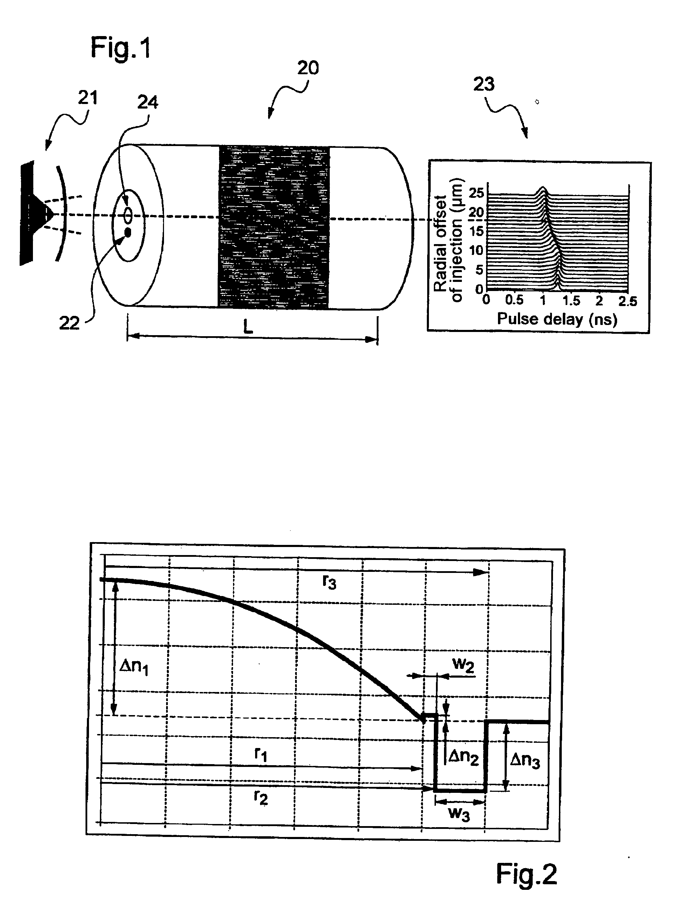

Figure 1 shows the principles of DMD measurement, performed using the criteria of the FOTP-220 standard as published in its TIA SCFO-6.6 version of November 22, 2002. A DMD graph is obtained by injecting identical light pulses 21 at a given wavelength $\lambda_0$ successively into the multimode optical fiber 20 at different radial offsets 22 relative to the optical fiber's core center 24, and measuring the delay of each pulse after a given length of fiber L. In order to characterize an optical fiber having a diameter of 50 $\mu$m, the FOTP-220 standard requires twenty-six individual measurements to be taken, each at a different radial offset. From those measurements, it is possible to deduce a map 23 of the DMD: the DMD graph, which gives the pulse delay (expressed in nanoseconds (ns) in the example of Figure 1) as a function of the radial offset of the injection (expressed in $\mu$m in the example of Figure 1), and it is also possible to deduce the EMBc in a known manner.

The TIA-492AAAC-A standardizes the performance required for broadband Ethernet transmission networks over long distances for multimode optical fibers having a diameter of 50 $\mu$m. The OM3 standard guarantees an EMB that is greater than or equal to 2000 megahertz-kilometers (MHz.km) at the wavelength of 850 nanometers (nm) so as to obtain error-free transmission at a rate of 10 gigabits per second (Gb/s) (e.g. 10 gigabits Ethernet (GbE)) over a distance of 300 meters (m). The OM4 standard guarantees an EMB that is greater than or equal to 4700 MHz.km at the wavelength 850 nanometer in order to obtain error-free transmission at a rate of 10 Gb/s (e.g. 10 GbE) over 550 m.

The OM3 and OM4 standards can also guarantee an OFL bandwidth at the wavelength 1300 nanometer that is greater than 500 MHz.km. A broadband optical fiber at the wavelength 850 nanometer and 1300 nanometer makes fast signal transmission possible over a broad band of wavelengths.

In a multimode fiber, the bandwidth is the result of the difference between the propagation times or group times of the modes along the optical fiber. In particular, for a given propagation medium (in a step index multimode optical fiber), the various modes have group times that are different. That gives rise to a time offset between pulses that propagate along the optical fiber at different radial positions.

For example, in Figure 1, a time offset is observed between individual pulses. This causes the resulting light pulse to be spread out and runs the risk of it becoming superposed on the following pulse, thereby reducing the rate that can be conveyed by the optical fiber. Bandwidth is thus directly associated with the group times of the optical modes propagating in the multimode core of the optical fiber.

In order to guarantee a broad bandwidth, it is necessary for the group times of all of the modes to be as close together as possible and ideally to be identical (i.e. for dispersion between modes to be zero or at least minimized) at a given wavelength.

In order to reduce such intermode dispersion in a multimode optical fiber, proposals have been made to produce graded index optical fibers with a central core having an "alpha" profile. Such an optical fiber has been used for many years and its characteristics are described in particular in the article by D. Gloge et al., "Multimode theory of graded-core fibers", Bell System Technical Journal 1973, pp. 1563-1578, and summarized in the article by G. Yabre entitled "Comprehensive theory of dispersion in graded-index optical fibers", Journal of Lightwave Technology, February 2000, Vol. 18, No. 2, pp. 166-177.

A graded index or "alpha" index profile (these two terms being equivalent) may be defined by the following relationship between the value $\underline{n}$ of the refractive index at a point as a function of the distance $\underline{r}$ of said point from the center of the fiber:

$$n = n_1 \sqrt{1 - 2\Delta\left(\frac{r}{r_1}\right)^{\alpha}}$$

where:

· $n_1$ is the maximum refractive index of the multimode core;
· $r_1$ is the radius of the multimode core;
· $\alpha \geq 1$; and

$$\Delta = \frac{\left(n_1^2 - n_0^2\right)}{2n_1^2},$$

where:
· $n_0$ is the minimum refractive index of the multimode core, generally corresponding to the refractive index of the cladding (usually made of silica).

A graded-index multimode optical fiber thus presents a central core refractive index profile that is axisymmetric such that, along any radial direction, the value of the refractive index decreases continuously from the center of the optical fiber towards its periphery. When a multimode light signal propagates in such a graded-index central core, the various modes see different propagation media, thereby affecting their propagation speeds differently. By adjusting the value of the parameter $\alpha$, it is thus possible to obtain group times that are practically equal for all of the modes, and thus obtain reduced dispersion between modes.

Nevertheless, in practice, the refractive index profile actually made for a multimode fiber comprises a graded-index central core surrounded by outer optical cladding of constant refractive index. Thus, the central core of the multimode fiber never corresponds to a perfect alpha profile, since the interface with the outer optical cladding interrupts the alpha profile.

The outer optical cladding accelerates higher-order modes relative to lower-order modes. This phenomenon is known as the "cladding effect". In DMD measurements, the responses acquired for the largest radial offsets thus present multiple pulses, giving rise to a time element in the resulting response. Bandwidth is necessarily decreased by this cladding effect.

Such broadband multimode optical fibers are intended in particular for use over short distances in a business local area network (LAN) in which they may be subjected to fortuitous bending. Such bending attenuates the signal and therefore degrades the signal-to-noise ratio.

It is therefore advantageous to devise a multimode optical fiber that is insensitive to bending, even when bent to radii of curvature of less than 10 millimeters (mm).

It is known to reduce bending losses in a multimode fiber by adding a buried trench in the cladding of the optical fiber. Nevertheless, the position and the depth of the trench need to be selected with care in order to avoid degrading the bandwidth.

European patent application publication EP 1 498 753 A1 discloses an optical fiber having a bandwidth that is greater than 2000 MHz.km at wavelengths of 850 nanometer and 1300 nanometer. Nevertheless, the optical fiber according to EP 1 498 753 does not ensure compliance with the OM4 standard nor does it take account of the trench effect that minimizes bending losses.

European patent application publication EP 1 503 230 A1 and US patent 7,315,677 B1 disclose optical fibers wherein the central core refractive index difference is obtained by co-doping with germanium and fluorine. The fluorine and germanium concentrations in the central ore are adjusted to optimize the bandwidth at the wavelengths 850 nanometer and 1300 nanometer. Nevertheless, the optical fibers according to EP 1 503 230 US 7,315,677 do not comply with the OM4 standard at the wavelength 850 nanometer nor do they take account of the effect of a trench that minimizes bending losses.

International application publication WO 2009/054715 A1 discloses an optical fiber wherein the central core refractive index difference is obtained by co-doping with germanium and fluorine. The optical fiber according to WO 2009/054715 presents a buried trench at the central core's periphery. The graded-index central core extends to a refreactive index below the refreactive index of the outer optical cladding. That extension of the central core to below the outer optical cladding can give rise to an increase in the size of the central core, which then becomes incompatible with the OM3 and OM4 standards. Extending the central core can also give rise to losses due to the propagation of leakage modes intrinsic to buried trench geometry.

A need exists for a graded-index multimode optical fiber that presents reduced bending losses, a broad bandwidth at the wavelengths 850 nanometer and 1300 nanometer, with a reduced cladding effect, and for use in broadband applications.

To this end, the invention provides an optical fiber comprising from the center towards the periphery:

  · a central core;
  · an inner cladding surrounding the central core;
  · a buried trench surrounding the inner cladding; and
  · an outer optical cladding;
  · the central core presenting a radius $r_1$ and an alpha refractive index profile and having a matrix doped at least by fluorine and by an element that increases refractive index;
  · The inner cladding presenting a width $w_2$ and a refractive index difference $\Delta n_2$ relative to the outer optical cladding;
  · the buried trench presenting a radius $r_3$, a width $w_3$, and a refractive index difference $\Delta n_3$ relative to the outer optical cladding;
  wherein:
  · the atomic ratio $C_F$ between the fluorine and all of the constituents of the doped matrix of the central core increases from the center of the fiber to $r_1$;
  · at $r_1$, the maximum value $C_{F,MAX}$ of the atomic ratio $C_F$ between the fluorine and all of the constituents of the doped matrix of the central core lies in the range $8.5 \times 10^{-3}$ to $57 \times 10^{-3}$; and
  · the buried trench presents a width $w_3$ lying in the range $2\ \mu m$ to $10\ \mu m$ and a refractive index difference $\Delta n_3$ relative to the outer optical cladding lying in the range $-15 \times 10^{-3}$ to $-6 \times 10^{-3}$.

Hence the present invention relates to an optical fiber according to claim 1.

In the optical fiber according to the present invention, the alpha refractive index profile of the central core, the inner cladding, and the buried trench serve to diminish bending losses while guaranteeing a broad bandwidth at the wavelength 850 nanometer. In addition, the concentrations of fluorine and of the dopant that increases the refractive index in the central core serve to optimize the bandwidth at the wavelength 1300 nanometer.

In an embodiment of the present invention, the dopant increasing the refractive index in the central core is germanium and the matrix of the central core is made of silica.

In another embodiment of the present invention, at $r_1$, the refractive index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -10.06 \times 1000 \times \Delta n_3 - 82.06$$

In yet another embodiment of the present invention, at $r_1$, the refractive index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -8.28 \times 1000 \times \Delta n_3 - 48.28$$

In yet another embodiment of the present invention, at $r_1$, the refractive index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -8 \times 1000 \times \Delta n_3 - 42.28$$

In yet another embodiment of the present invention, the atomic ratio $C_F$ between the fluorine and all of the constituents of the doped matrix of the central core as a function of the radial distance $\underline{r}$ from the center of the optical fiber is given by the following expression:

$$C_F(r) = C_F^{(1)} + \left(\frac{r}{r_1}\right)^p \cdot \left(C_{F,MAX} - C_F^{(1)}\right)$$

where:

· $r_1$ is the radius of the central core;

· $\underline{p}$ is a constant substantially equal to 2; and · $C_F^{(1)}$ is a positive constant less than $1.25 \times 10^{-3}$.

In yet another embodiment of the present invention, the alpha refractive index profile of the central core presents a parameter alpha, $\alpha$, having a value lying in the range 1.9 to 2.1.

In yet another embodiment of the present invention, the refractiveindex difference $\Delta n_1$ of the central core relative to the outer optical cladding presents a maximum value lying in the range $10 \times 10^{-3}$ to $18 \times 10^{-3}$.

In yet another embodiment of the present invention, the refractive index difference $\Delta n_1$ of the central core relative to the outer optical cladding presents a maximum value lying in the range $11 \times 10^{-3}$ to $16 \times 10^{-3}$.

In yet another embodiment of the present invention, the width $w_2$ of the inner cladding lies in the range 0.5 $\mu$m to 2 $\mu$m.

In yet another embodiment of the present invention, the refractive index difference $\Delta n_2$ of the inner cladding relative to the outer optical cladding lies in the range $-0.2 \times 10^{-3}$ to $2 \times 10^{-3}$.

In yet another embodiment of the present invention, the width $w_3$ of the buried trench lies in the range 3 $\mu$m to 5 $\mu$m.

In yet another embodiment of the present invention, the optical fiber presents a numerical aperture lying in the range 0.185 to 0.215.

In yet another embodiment of the present invention, the optical fiber also presents at the wavelength 850 nanometer, bending losses for two turns with a radius of curvature of 7.5 mm of less than 0.2 decibels (dB) or less than 0.1 dB.

In yet another embodiment of the present invention, the optical fiber also presents at the wavelength 850 nanometer, bending losses for two turns with a radius of curvature of 7.5 mm of less than 0.05 dB or less than 0.01 dB.

In yet another embodiment of the present invention, the optical fiber also presents at the wavelength 1300 nanometer, bending losses for two turns with a radius of curvature of 7.5 mm of less than 0.5 dB or less than 0.3 dB.

In yet another embodiment of the present invention, the optical fiber also presents at the wavelength 1300 nanometer, bending losses for two turns with a radius of curvature of 7.5 mm of less than 0.2 dB or less than 0.1 dB.

In yet another embodiment of the present invention, the optical fiber also presents at the wavelength 1300 nanometer, bending losses for two turns with a radius of curvature of 7.5 mm less than 0.05 dB.

In yet another embodiment of the present invention, the optical fiber also presents at the wavelength 850 nanometer, an overfilled launch (OFL) bandwidth greater than 1500 MHz.km.

In yet another embodiment of the present invention, the optical fiber also presents at the wavelength 850 nanometer, an OFL bandwidth greater than 3500 MHz.km.

In yet another embodiment of the present invention, the optical fiber also presents at the wavelength 1300 nanometer, an overfilled launch (OFL) bandwidth greater than 500 MHz.km.

In yet another embodiment of the present invention, the optical fiber also presents at the wavelength 1300 nanometer, an OFL bandwidth greater than 600 MHz.km.

In yet another embodiment of the present invention, the optical fiber also presents at the wavelength 850 nanometer, the dispersion mode delay DMDext as acquired with a mask covering the outer portion of the central core in accordance with the FOTP-220 standard is less than 0.33 picoseconds per meter (ps/m).

In yet another embodiment of the present invention, the optical fiber also presents at the wavelength 850 nanometer, the dispersion mode delay DMDext as acquired with a mask covering the outer portion of the central core in accordance with the FOTP-220 standard is less than 0.25 ps/m.

In yet another embodiment of the present invention, the optical fiber also presents at the wavelength 850 nanometer, the dispersion mode delay DMDext as acquired with a mask covering the outer portion of the central core in accordance with the FOTP-220 standard is less than 0.14 ps/m.

The invention also provides a multimode optical system including at least a portion of optical fiber in accordance with the invention.

In an embodiment, this optical system presents a rate greater than or equal to 10 Gb/s over 100 m.

In an embodiment, this optical system presents a rate greater than or equal to 10 Gb/s over 300 m.

Other characteristics and advantages of the invention appear on reading the following description of particular embodiments of the invention, given as non-limiting examples and with reference to the accompanying drawings, in which:

· Figure 1, described above, is a diagram illustrating DMD measurement;
· Figure 2 is a refractive index profile for an example of an optical fiber according to the present invention;
· Figure 3 shows concentrations of fluorine and germanium as a function of radius in comparative optical fiber not according to the present invention;
· Figure 4 shows concentrations of fluorine and germanium as a function of radius in another in comparative optical fiber not according to the present invention;
· Figure 5 shows concentrations of fluorine and germanium as a function of radius in an optical fiber according to the present invention;
· Figure 6 shows both the relationship between the atomic ratio of fluorine to all of the constituents of the doped matrix of the central core, and also the refractive index difference that results from the fluorine doping;
· Figure 7A shows the overfilled launch bandwidth at the wavelength 1300 nanometer as a function of the OFL bandwidth at the wavelength 850 nanometer for prior art optical fibers, for different values of the parameter alpha and for different values of the refractive index difference of the buried trench;
· Figure 7B shows the OFL bandwidth at the wavelength 1300 nanometer as a function of the OFL bandwidth at the wavelength 850 nanometer for optical fibers according to the present invention;
· Figure 8 shows the OFL bandwidth at the wavelength 1300 nanometer in two optical fibers in accordance with the invention and in an optical fiber that is not in accordance with the invention, as a function of the value of the atomic ratio between the fluorine and all of the constituents of the doped matrix of the central core at the end of the alpha profile of the central core, for three respective values of the refractive index difference of the buried trench;
· Figure 9 is a graph showing the OFL bandwidth at the wavelength 1300 nanometer as a function of the value of the atomic ratio between the fluorine and all of the constituents of the doped matrix of the central core at the end of the alpha profile of the central core, and as a function of the refractive index difference of the buried trench;
· Figure 10 shows the parameter alpha that makes it possible to obtain a maximum bandwidth at the wavelength 850 nanometer as a function of the value of the atomic ratio between the fluorine and all of the constituents of the doped matrix of the central core at the end of the alpha profile of the central core; and

· Figure 11 shows attenuation at the wavelength 850 nanometer as a function of the value of the atomic ratio between the fluorine and all of the constituents of the doped matrix of the central core at the end of the alpha profile of the central core.

The present invention can be better understood with reference to Figure 2 which shows a refractive index profile for an optical fiber in accordance with the present invention, in a particular embodiment.

The optical fiber according to the present invention is a multimode optical fiber having a central core and an outer optical cladding.

Going from the center towards the periphery of the optical fiber, the central core comprises a central core, an inner cladding (which therefore surrounds the central core), and a buried trench (which therefore surrounds the inner cladding).

The central core presents a radius $r_1$ and an alpha refractive index profile relative to the outer optical cladding. The central core presents a refractive index difference $\Delta n_1$ relative to the outer optical cladding at the beginning of the alpha profile. The term "beginning of the alpha profile" should be understood to mean the point of the central core where the refractive index profile presents a maximum value, typically at the center of the central core. The central core presents a refractive index difference $\Delta n_{end}$ (not shown in Figure 2) relative to the outer optical cladding at the end of the alpha profile. The term "end of the alpha profile" should be understood to mean the radial distance from which the refractive index profile is no longer an "alpha" profile. The radius $r_1$ should be understood as being the distance between the radial distance at the beginning of the alpha profile and the radial distance at the end of the alpha profile.

The central core also presents the typical characteristics of a multimode optical fiber. For example, the radius $r_1$ of the central core is equal to 25 $\mu$m $\pm$ 2 $\mu$m. For example, the refractive index difference $\Delta n_1$ relative to the outer optical cladding at the beginning of the alpha profile lies in the range $10\times10^{-3}$ and $18\times10^{-3}$, and advantageously in the range $11\times10^{-3}$ to $16\times10^{-3}$. For example, the parameter alpha $\alpha$ of the central core lies in the range 1.9 to 2.1.

The central core comprises a matrix, defined as the main constituent of the central core, in which other constituents, such as dopants, may be included. Typically, in an optical fiber, the refractive index difference relative to the outer optical cladding is obtained by including dopants in the matrix that modify the refractive index. For example, germanium (e.g. in the form of germanium dioxide $GeO_2$) increases the refractive index, whereas fluorine decreases the refractive index. For example, the matrix of the central core is made of silica (silicon dioxide, $SiO_2$).

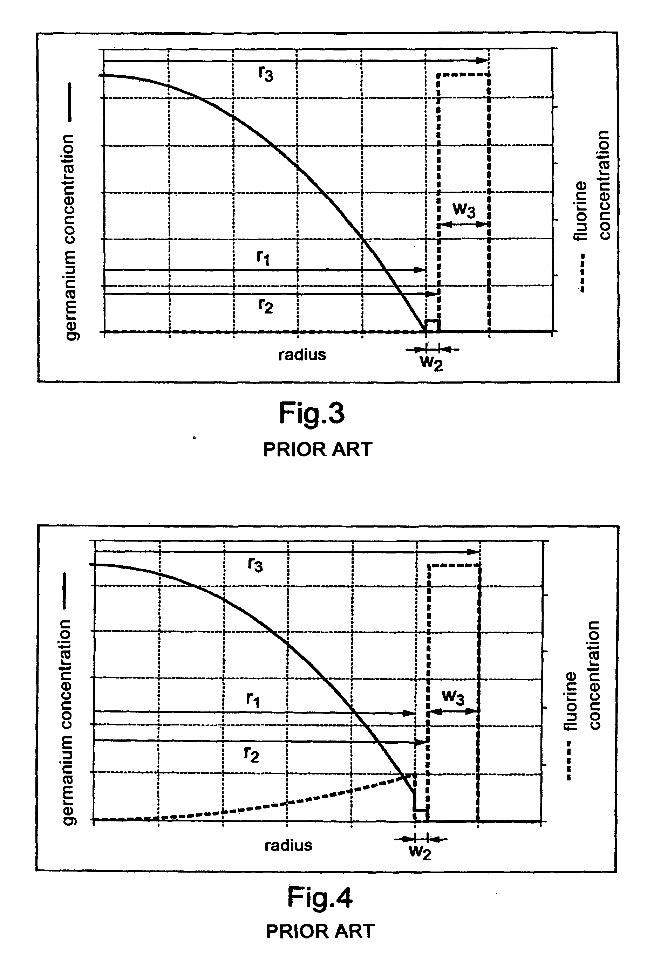

Thus, the refractive index profile shown in Figure 2 may be obtained with the fluorine and germanium concentration profiles shown in Figure 3. The concentration profiles shown in Figure 3 are examples from the prior art.

As shown in Figure 3, where the germanium concentration curve is represented by a continuous line and the fluorine concentration curve is represented by a dashed line:

· for a radius less than the radius $r_1$ of the central core, the concentration of fluorine is zero and the concentration of germanium decreases with a gradient corresponding to the alpha index profile of the central core;

· for a radius lying between the radius $r_1$ of the central core and the radius $r_2$ of the inner cladding, the fluorine concentration is zero and the germanium concentration corresponds to the increase $\Delta n_2$ of the refractive index of the inner cladding relative to the outer optical cladding; and

· for a radius lying between the radius $r_2$ of the inner cladding and the radius $r_3$ of the buried trench, the germanium concentration is zero and the fluorine concentration corresponds to the decrease $\Delta n_3$ of the refractive index of the buried trench relative to the outer optical cladding.

In the example shown in Figure 3, it can be seen that the refractive index difference is obtained either using germanium alone, or using fluorine alone. The refractive index profile of Figure 2 may also be obtained using co-doping of germanium and fluorine, as shown in Figure 4. The concentration profiles shown in Figure 4 are examples from the prior art.

As shown in Figure 4, where the germanium concentration curve is represented by a continuous line and the fluorine concentration curve is represented by a dashed line:

· for a radius less than the radius $r_1$ of the central core, the fluorine concentration increases progressively from the center of the optical fiber towards the end of the alpha profile, and the germanium concentration decreases progressively from the center of the optical fiber towards the end of the alpha profile.

Thus, in the example of Figure 4, and contrary to the example of Figure 3, the alpha index profile is obtained by combining germanium, which increases the refractive index, with fluorine, which decreases the refractive index.

The use of such co-doping provides better control over the resulting refractive index profile. The appearance of the refractive index profile is controlled more finely by using two dopants instead of only one.

Furthermore, each dopant imparts losses to the optical signal being transmitted, thereby decreasing the bandwidth of the optical fiber. These losses are a function of the dopant, of the concentration of the dopant, and of the wavelength of the transmitted fiber signal.

A doping concentration profile of an optical fiber may be adapted to achieve a broad bandwidth at a given wavelength. Nevertheless, the same doping concentration profile may give rise to a narrow bandwidth at some other wavelength.

In the optical fiber in accordance with the present invention, co-doping serves to control losses in the transmitted optical signal and thus to limit bandwidth variation at the wavelengths 850 nanometer and 1300 nanometer.

The co-doping is performed using fluorine together with another dopant that increases the refractive index, such as germanium. In particular, co-doping the optical fiber in accordance with the present invention makes it possible to obtain a broad bandwidth at the wavelength 850 nanometer and a bandwidth that is degraded only a little at the wavelength 1300 nanometer.

An optimum concentration of fluorine makes it possible to achieve a compromise between firstly the width of the bandwidth at 1300 nanometer and secondly the values of the attenuation at 850 nanometer and at 1300 nanometer.

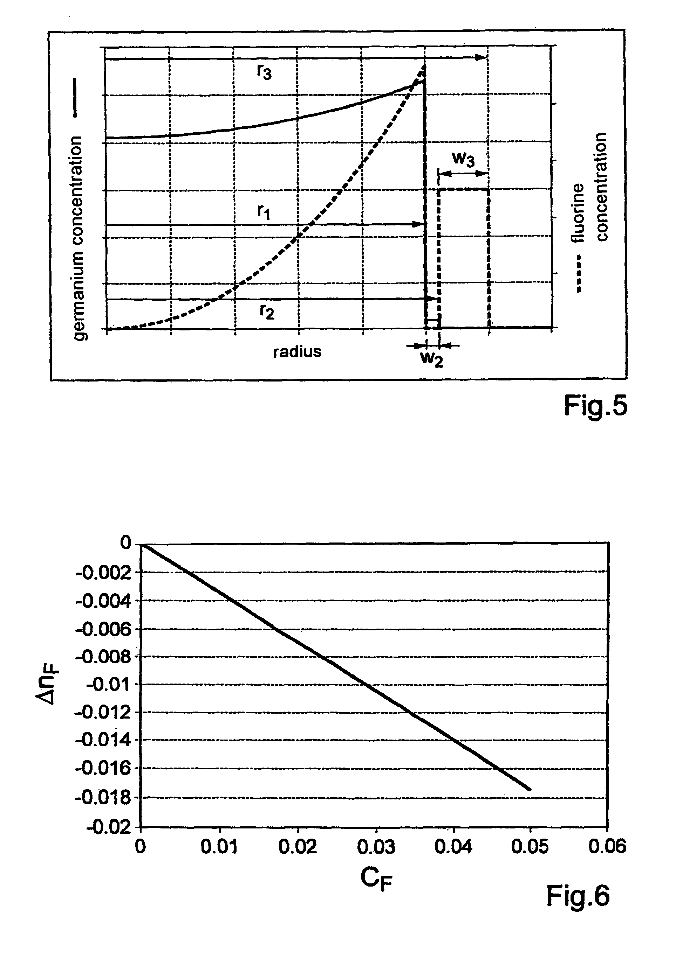

This can be better understood with reference to Figure 5, which shows dopant concentration profiles in an example of an optical fiber according to the present invention. The concentration profiles shown in Figure 5 also serve to obtain the refractive index profile of Figure 2.

As shown in Figure 5, where the germanium concentration curve is represented by a continuous line and the fluorine concentration curve is represented by a dashed line:

· for a radius less than the radius $r_1$ of the central core, the fluorine concentration has a value of substantially zero in the center of the central core and increases progressively up to the end of the alpha profile of the central core.

For example, the fluorine concentration increases progressively with a parabolic shape. The fluorine concentration is expressed as the atomic ratio, written $C_F$, between the fluorine and all of the constituents of the doped matrix of the central core. The term "doped matrix" is used to mean the assembly comprising firstly the base material of the central core, e.g. silica (which constitutes the matrix of the central core), and secondly all of the other constituents of the central core, including the dopant elements that are included in the matrix.

More precisely, the atomic ratio is the number of fluorine atoms divided by the total number of atoms (all constituents included) in the doped matrix of the central core.

For example, the atomic ratio $C_F$ between the fluorine and all of the constituents of the doped matrix of the central core may be expressed as a function of the radial distance, written $\underline{r}$, from the center of the fiber (or fiber radius $\underline{r}$), as follows:

$$C_F(r) = C_F^{(1)} + \left(\frac{r}{r_1}\right)^p \cdot \left(C_F^{(2)} - C_F^{(1)}\right)$$

where:

· $r_1$ is the radius of the central core;
· $\underline{p}$ is a constant that is substantially equal to 2;

· $C_F^{(2)}$ is the value of the atomic ratio between the fluorine and all of the constituents of the doped matrix of the central core at the end of the alpha profile of the central core, this atomic ratio also being written:

$$C_{F,MAX} \text{ (i.e. } C_F^{(2)} = C_{F,MAX}\text{)};$$

by way of example, the value of $C_{F,MAX}$ lies in the range $8.5 \times 10^{-3}$ to $57 \times 10^{-3}$; and $C_F^{(1)}$ is a positivze constant, e.g.

less than $1.25\times10^{-3}$ (i.e. $C_F^{(I)} < 1.25\times10^{-3}$).

The graph of Figure 6 shows the relationship that exists at a point of the central core between firstly the atomic ratio $C_F$ between the fluorine and all of the constituents of the doped matrix of the central core, and secondly the refractive index difference $\Delta n_F$ that results from the fluorine doping. More precisely, this relationship is given by the following expression:

$$\Delta n_F = -0.35\times C_F$$

where:

· $\Delta n_F$ is the refractive index difference at the wavelength 633 nanometer between the refractive index of the matrix of the central core and the refractive index of the matrix of the central core doped solely with fluorine having the atomic ratio $C_F$. For example, in Figure 6, it can be seen that a fluorine atomic ratio $C_F$ of $10\times10^{-3}$ produces a refractive index difference $\Delta n_F$ of $-3.5\times10^{-3}$.

In accordance with the present invention, the central core also includes another dopant that increases the refractive index. The concentration of this dopant that increases the refractive index in the central core is a function of the alpha profile of the central core and of the fluorine concentration in the central core. For example, while fabricating the optical fiber, the concentration of the dopant that increases the refractive index is obtained by iteration starting from the specified fluorine concentration and the desired alpha profile. By way of non-limiting example, the dopant that increases the refractive index is germanium.

The characteristics of the co-doping with fluorine and with the dopant that increases the refractive index ensures a broad bandwidth at the wavelength 850 nanometer and a bandwidth that is degraded only a little at the wavelength 1300 nanometer.

In particular, the co-doping characteristics make it possible to guarantee an OFL bandwidth:

· that is greater than 1500 MHz.km, or greater than 3500 MHz.km, or even greater than 10,000 MHz.km at the wavelength 850 nanometer; and
· that is greater than 500 MHz.km, or greater than 600 MHz.km, at the wavelength 1300 nanometer.

The optical fiber in accordance with the present invention includes an inner cladding that surrounds the central core. In an embodiment, the inner cladding is situated at the periphery of the central core.

The inner cladding presents the following profile characteristics:

· a width $w_2$, e.g. lying in the range 0.5 $\mu$m to 2 $\mu$m; and
· a refractive index difference $\Delta n_2$ relative to the outer optical cladding that, for example, is constant over the entire width $w_2$ of the inner cladding and that lies in the range $-0.2\times10^{-3}$ to $2\times10^{-3}$, for example.

The characteristics of the refractive index profile of the inner cladding have an influence on the cladding effect and they contribute to obtaining a broad bandwidth at the wavelengths 850 nanometer and 1300 nanometer.

The optical fiber according to the present invention also includes a buried trench that surrounds the inner cladding. The term "buried trench" is used to mean the radial portion of the fiber having a refractive index value that is significantly less than the refractive index of the outer optical cladding. In an embodiment, the buried trench is situated at the periphery of the inner cladding.

The buried trench presents the following profile characteristics:

· a width $w_3$, lying in the range 2 $\mu$m to 10 $\mu$m, or in the range 3 $\mu$m to 5 $\mu$m; and
· a refractive index difference $\Delta n_3$ relative to the outer optical cladding that is lower than $-6\times10^{-3}$, for example. The refractive index difference $\Delta n_3$ of the buried trench may be limited by the fiber fabrication process. For example, it may be impossible for the refractive index difference $\Delta n_3$ of the buried trench to be lower than $-15\times10^{-3}$ (viz. it should be higher than $-15\times10^{-3}$).

The characteristics of the profile of the buried trench serve mainly to obtain low bending losses. In particular, at the wavelength 850 nanometer, the optical fiber presents bending losses for two turns with a radius of curvature of 7.5 mm that are less than 0.2 (dB), or less than 0.1 dB. At the wavelength 850 nanometer, the bending losses for two turns with a radius of curvature of 7.5 mm may be even less than 0.05 dB, or less than 0.01 dB.

At the wavelength 1300 nanometer, the optical fiber presents bending losses for two turns at a radius of curvature of 7.5 mm that are less than 0.5 dB, or less than 0.3 dB. At the wavelength 1300 nanometer, the bending losses for two turns with a radius of curvature of 7.5 mm may even be less than 0.2 dB, or less than 0.1 dB. At the wavelength 1300 nanometer, the bending losses for two turns with a radius of curvature of 7.5 mm may even be less than 0.05 dB.

The above values for bending losses correspond to the launching conditions defined in the standard IEC 61280-4-1. The optical fiber providing appropriate launching conditions is a conventional multimode optical fiber (MMF) having a numerical aperture of 0.2 and a core size of 50.0 $\mu$m $\pm$ 0.7 $\mu$m in accordance with the above-mentioned standard.

The optical fiber also presents outer optical cladding that is typical of a multimode fiber. For example, the outer optical cladding is made of natural silica for reasons of cost. In another example, the outer optical cladding is made of doped silica.

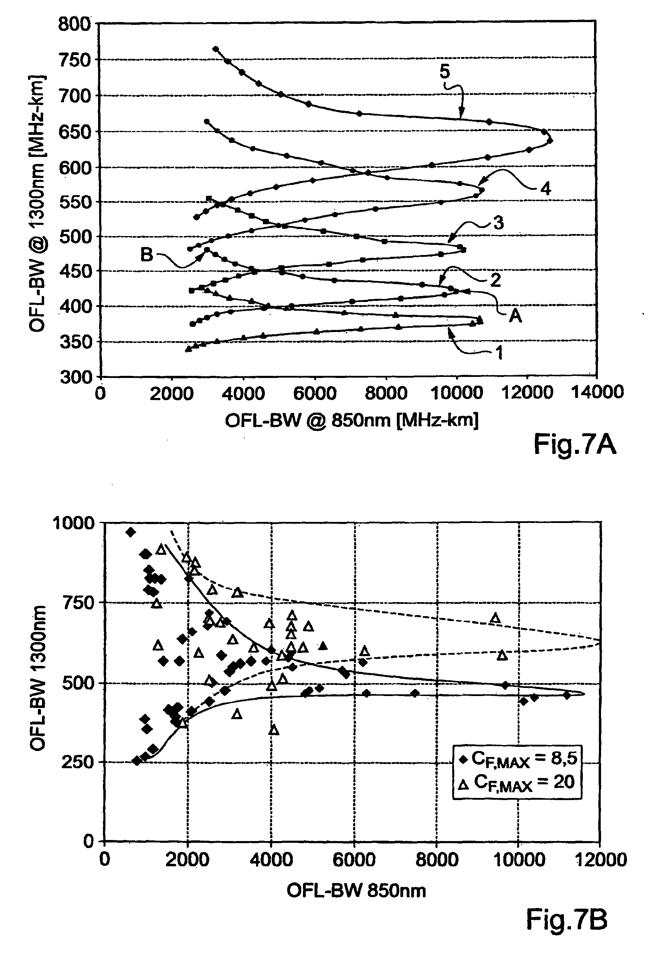

The value of the bandwidth at the wavelength 1300 nanometer is also a function of the characteristics of the buried trench. This can be better understood by referring to Figures 7A and 7B, which represent the OFL bandwidth at the wavelength 1300 nanometer (written "OFL-BW @ 1300 nanometer" in Figure 7A and "OFL-BW 1300 nanometer" in Figure 7B) as a function of the OFL bandwidth at the wavelength 850 nanometer (written "OFL-BW @ 850 nanometer" in Figure 7A and "OFL-BW 850 nanometer" in Figure 7B). The values of these bandwidths are expressed in MHz.km.

Curves 1 to 5 in Figure 7A were acquired on prior art optical fibers (i.e. optical fibers not according to the present invention) having concentration profiles identical to those shown in Figure 3, with the exception of the profile of the buried trench.

Each optical fiber had a fluorine concentration at a different level in the buried trench, making it possible to achieve a refractive index difference $\Delta n_3$ for the corresponding buried trench. Thus, curves 1 to 5 were acquired respectively for a buried trench index difference $\Delta n_3$ equal to $-5 \times 10^{-3}$, $-6 \times 10^{-3}$, $-8 \times 10^{-3}$, $-11 \times 10^{-3}$, and $-15 \times 10^{-3}$. In addition, the buried trench had a width $w_3$ of 4 $\mu$m.

Each curve is approximated from 21 points obtained for respective values of the parameter alpha. The parameter alpha varies over the range 1.9 to 2.1.

In each of the curves 1 to 5, it can be seen that for a given value of the parameter alpha, there is a corresponding pair of OFL bandwidth at the wavelength 850 nanometer and OFL bandwidth at the wavelength 1300 nanometer.

The maximum values of the OFL bandwidth at the wavelength 850 nanometer and of the OFL bandwidth at the wavelength 1300 nanometer are not obtained for the same value of the parameter alpha. For example, in curve 2, the maximum value of the OFL bandwidth at the wavelength 850 nanometer is obtained at point A, whereas the maximum value of the OFL bandwidth at the wavelength 1300 nanometer is obtained at point B.

In certain applications, it is preferable to have a value for the parameter alpha at which the OFL bandwidth at the wavelength 850 nanometer is at a maximum. By comparing curves 1 to 5, it can be seen that at the point where the OFL bandwidth at the wavelength 850 nanometer is at a maximum, the OFL bandwidth at the wavelength 1300 nanometer increases with decreasing refractive index difference $\Delta n_3$ for the buried trench. Thus, in an optical fiber that has a buried trench, for a given width of trench, the bandwidth at the wavelength 1300 nanometer depends on the refractive index difference $\Delta n_3$ of the buried trench.

The curves of Figure 7B were obtained for optical fibers in accordance with the present invention, having a refractive index difference $\Delta n_3$ for the buried trench equal to $-7 \times 10^{-3}$, approximately, on the basis of measurements that are represented by points on the graph: the lozenge-shaped points were obtained for $C_{F,MAX} = 8.5$ and the triangle-shaped points for $C_{F,MAX} = 20$.

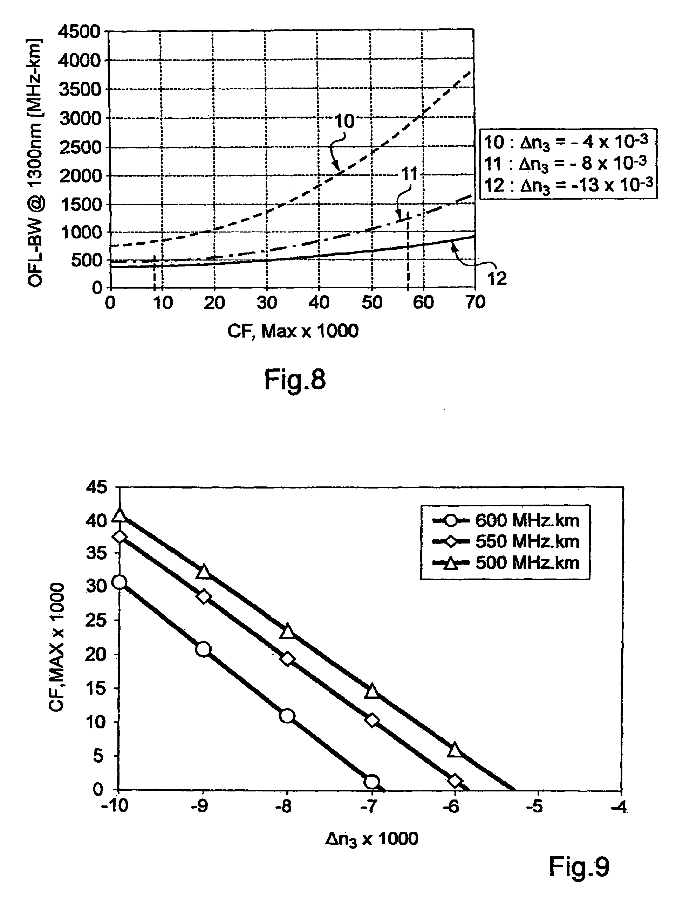

In the optical fiber according to the present invention, co-doping with fluorine and with a dopant that increases the refractive index makes it possible to decrease the effect of the trench on the bandwidth at the wavelength 1300 nanometer. This can be better understood by referring to Figure 8.

Figure 8 shows the OFL bandwidth at the wavelength 1300 nanometer (written "OFL-BW @ 1300 nanometer" in the drawing), expressed in MHz.km, as a function of the value $C_{F,MAX}$ of the atomic ratio between the fluorine and all of the constituents of the doped matrix of the central core at the end of the alpha profile of the central core.

Curves 11 and 12 in Figure 8 correspond to optical fibers in accordance with the present invention. They were acquired for buried trenches having respective index differences $\Delta n_3$ of $-8 \times 10^{-3}$ and $-13 \times 10^{-3}$, and for a width $w_3$ of 4 $\mu$m.

Curve 10 in Figure 8 corresponds to an optical fiber that is not in accordance with the invention. It was acquired for a buried trench having a refractive index difference $\Delta n_3$ of $-4 \times 10^{-3}$ and a width $w_3$ of 4 $\mu$m.

It can be seen that a value $C_{F,MAX}$ of the atomic ratio between the fluorine and all of the constituents of the doped matrix of the central core at the end of the alpha profile of the central core lying in the range $8.5 \times 10^{-3}$ to $57 \times 10^{-3}$ makes it possible to attenuate the buried trench effect and to increase the OFL bandwidth at the wavelength 1300 nanometer. $C_{F,MAX} < 8.5 \times 10^{-3}$ corresponds to a refractive index difference of $-3 \times 10^{-3}$ and to fibers that are conventional, whereas $C_{F,MAX} > 57 \times 10^{-3}$ corresponds to a refractive index difference of $-20 \times 10^{-3}$, which is considered as being a lower limit for a practical embodiment.

The increase in fluorine concentration, unlike a modification to the value of the parameter $\alpha$ of the alpha profile, serves to broaden the bandwidth at the wavelength 1300 nanometer without degrading the bandwidth at 850 nanometer.

Thus, in curve 12 of Figure 8, it can be seen that by increasing the value $C_{F,MAX}$ of the atomic ratio between the fluorine and all of the constituents of the doped matrix of the central core at the end of the alpha profile of the central core causes the bandwidth at the wavelength 1300 nanometer to pass from less than 500 MHz.km to a bandwidth of about 700 MHz.km.

In curve 11 of Figure 8, it can be seen that by increasing the value $C_{F,MAX}$ of the atomic ratio between the fluorine and all of the constituents of the doped matrix of the central core at the end of the alpha profile of the central core, the bandwidth at the wavelength 1300 nanometer passes from less than 500 MHz.km to a bandwidth greater than 1000 MHz.km.

In curve 10 of Figure 8, it can be seen that by increasing the value $C_{F,MAX}$ of the atomic ratio between the fluorine and all of the constituents of the doped matrix of the central core at the end of the alpha profile of the central core, the bandwidth at the wavelength 1300 nanometer passes from less than 1000 MHz.km to a bandwidth greater than 2500 MHz.km.

It can likewise be seen that the improvement in the bandwidth at the wavelength 1300 nanometer is also a function of the refractive index difference $\Delta n_3$ of the buried trench. This can be better understood by making reference to Figure 9.

Figure 9 shows the bandwidth at the wavelength 1300 nanometer as a function of the refractive index difference $\Delta n_3$ of the buried trench and as a function of the value $C_{F,MAX}$ of the atomic ratio between the fluorine and all of the constituents of the doped matrix of the central core at the end of the alpha profile of the central core. It can be seen that for a given pair of values $\Delta n_3$ and $C_{F,MAX}$, a bandwidth value at the wavelength 1300 nanometer is obtained.

In an embodiment, the refractive index difference $\Delta n_3$ of the buried trench and the value $C_{F,MAX}$ of the atomic ratio between the fluorine and all of the constituents of the doped matrix of the central core at the end of the alpha profile of the central core satisfy the following relationship:

$$C_{F,MAX} \times 1000 > -10.06 \times 1000 \times \Delta n_3 - 82.06$$

In other words, in this embodiment, the refractive index difference $\Delta n_3$ of the buried trench and the refractive index difference $\Delta n_{F,MAX}$ that results from the fluorine doping at the end of the alpha profile of the central core satisfy the following relationship:

$$\Delta n_{F,MAX} < 3.14 \times 1000 \times \Delta n_3 + 21.54$$

The characteristics of the optical fiber according to the present invention, and in particular the relationships set out above, serve to obtain low bending losses, a broad bandwidth at the wavelength 850 nanometer, and a bandwidth greater than 500 MHz.km at the wavelength 1300 nanometer.

For example, for a refractive index difference $\Delta n_3$ of the buried trench equal to $-7 \times 0^{-3}$, the value $C_{F,MAX}$ of the atomic ratio between the fluorine and all of the constituents of the doped matrix of the central core at the end of the alpha profile of the central core, is greater than $1.25 \times 10^{-3}$ and the refractive index difference $\Delta n_{F,MAX}$ that results from the fluorine doping at the end of the alpha profile of the central core is less than $-0.44$.

In this embodiment, the refractive index difference $\Delta n_3$ of the buried trench and the value $C_{F,MAX}$ of the atomic ratio between the fluorine and all of the constituents of the doped matrix of the central core at the end of the alpha profile of the central core satisfy the following relationship:

$$C_{F,MAXx} \times 1000 > -8.28 \times 1000 \times \Delta n_3 - 48.28$$

In other words, in this embodiment, the refractive index difference $\Delta n_3$ of the buried trench and the refractive index difference $\Delta n_{F,MAX}$ that results from the fluorine doping at the end of the alpha profile of the central core satisfy the following relationship:

$$\Delta n_{F,MAX} < 2.9 \times 1000 \times \Delta n_3 + 16.9$$

The characteristics of the optical fiber according to the present invention, and in particular the relationships set out above, serve to obtain low bending losses, a broad bandwidth at the wavelength 850 nanometer, and a bandwidth greater than 550 MHz.km at the wavelength 1300 nanometer.

For example, for a refractive index difference $\Delta n_3$ of the buried trench equal to $-7\times10^{-3}$, the value $C_{F,MAX}$ of the atomic ratio between the fluorine and all of the constituents of the doped matrix of the central core at the end of the alpha profile of the central core, is greater than $9.7\times10^{-3}$, and the refractive index difference $\Delta n_{F,MAX}$ that results from the fluorine doping at the end of the alpha profile of the central core is lower than -3.4.

For example, for a refractive index difference $\Delta n_3$ of the buried trench equal to $-10\times10^{-3}$, the refractive index difference $\Delta n_{F,MAX}$ that results from the fluorine doping at the end of the alpha profile of the central core is lower than -12.1.

In an embodiment, the refractive index difference $\Delta n_3$ of the buried trench and the value $C_{F,MAX}$ of the atomic ratio between the fluorine and all of the constituents of the doped matrix of the central core at the end of the alpha profile of the central core satisfy the following relationship:

$$C_{F,MAX} \times 1000 > -8 \times 1000 \times \Delta n_3 - 42.28$$

In other words, in this embodiment, the refractive index difference $\Delta n_3$ of the buried trench and the refractive index difference $\Delta n_{F,MAX}$ that results from the fluorine doping at the end of the alpha profile of the central core satisfy the following relationship:

$$\Delta n_{F,MAX} < 2.8 \times 1000 \times \Delta n_3 + 14.8$$

The characteristics of the optical fiber according to the present invention, and in particular the relationships set out above, serve to obtain low bending losses, a broad bandwidth at the wavelength 850 nanometer, and a bandwidth greater than 600 MHz.km at the wavelength 1300 nanometer.

For example, for a refractive index difference $\Delta n_3$ of the buried trench equal to $-7\times10^{-3}$, the value $C_{F,MAX}$ of the atomic ratio between the fluorine and all of the constituents of the doped matrix of the central core at the end of the alpha profile of the central core, is greater than $13.7\times10^{-3}$, and the refractive index difference $\Delta n_{F,MAX}$ that results from the fluorine doping at the end of the alpha profile of the central core is lower than -4.8.

For example, for a refractive index difference $\Delta n_3$ of the buried trench equal to $-10\times10^{-3}$, the value $C_{F,MAX}$ of the atomic ratio between the fluorine and all of the constituents of the doped matrix of the central core at the end of the alpha profile of the central core is greater than $37.7\times10^{-3}$ and the refractive index difference $\Delta n_{F,MAX}$ that results from the fluorine doping at the end of the alpha profile of the central core is lower than -13.2.

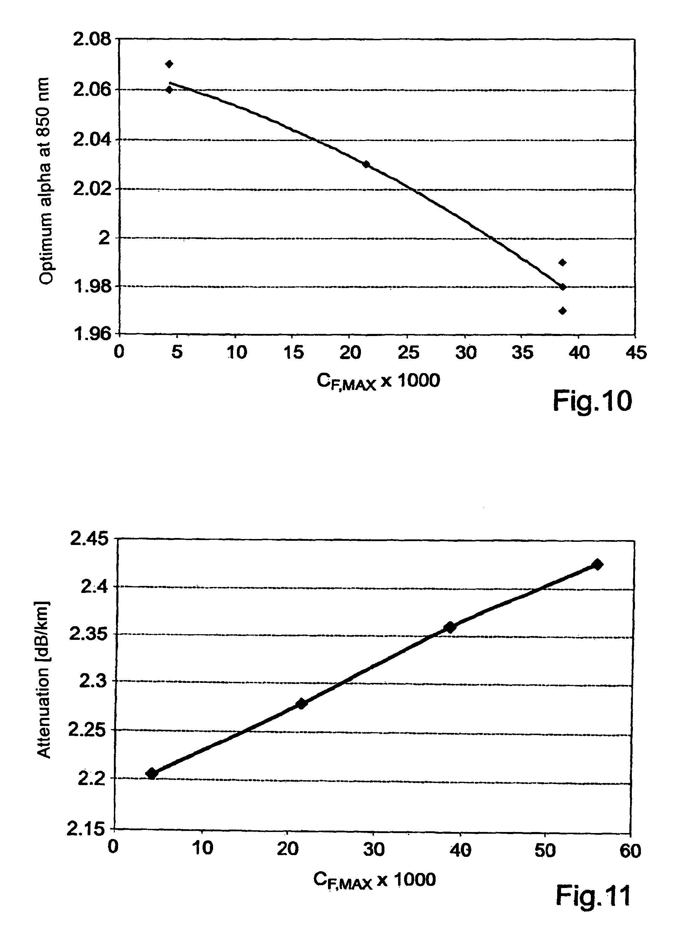

Figure 10 shows the value of the parameter alpha ($\alpha$) of the alpha profile at which the bandwidth at the wavelength 850 nanometer is at a maximum as a function of the value $C_{F,MAX}$ of the atomic ratio between the fluorine and all of the constituents of the doped matrix of the central core at the end of the alpha profile of the central core.

The parameters $\alpha$ were acquired for optical fibers having a trench with a width $w_3$ of 4 $\mu$m and different values of the refractive index difference $\Delta n_3$ relative to the outer optical cladding, namely: $-13\times10^{-3}$; $-8\times10^{-3}$; $-4\times10^{-3}$; and $-1\times10^{-3}$.

The depth of the trench has no effect on the optimum target value of the parameter $\alpha$, unlike the value $C_{F,MAX}$ of the atomic ratio between the fluorine and all of the constituents of the doped matrix of the central core at the end of the alpha profile of the central core.

In the figure, certain representative points are superposed on one another. It can be seen that in a fiber in accordance with the invention, the value $C_{F,MAX}$ of the atomic ratio between the fluorine and all of the constituents of the doped matrix of the central core at the end of the alpha profile of the central core makes it possible to conserve a parameter alpha lying in the range 1.9 to 2.1.

Figure 11 shows the attenuation of the signal transmitted by the optical fiber (expressed in decibels per kilometer (dB/km)) as a function of the value $C_{F,MAX}$ of the atomic ratio between the fluorine and all of the constituents of the doped matrix of the central core at the end of the alpha profile of the central core.

It can be seen that in the optical fiber in accordance with the invention, the value $C_{F,MAX}$ of the atomic ratio between the fluorine and all of the constituents of the doped matrix of the central core at the end of the alpha profile of the central core serves to conserve attenuation lying in the range 2.2 dB/km to 2.45 dB/km.

The characteristics of the optical fiber according to the present invention, and in particular the relationship between the refractive index difference $\Delta n_2$ of the inner cladding and the refractive index difference $\Delta n_3$ of the buried trench enable low bending losses to be obtained while conserving a broad bandwidth at the wavelength 850 nanometer with a reduced cladding effect.

In a first embodiment, the alpha index profile of the central core is interrupted at a radius $r_{alpha}$ at a value $\Delta n_{end}$ that is positive. The radius $r_{alpha}$ is less than the radius $r_1$ of the central core. In this embodiment, the radius $r_1$ is the radial distance at which the alpha index profile of the central core would reach the value zero if it were not interrupted at the value $\Delta n_{end}$. For a radius lying between the value $r_{alpna}$ and the radius $r_1$ of the central core, the refractive index difference is equal to the value $\Delta n_{end}$.

In this embodiment, the inner cladding has a refractive index difference $\Delta n_2$ relative to the outer optical cladding that is equal to the refractive index difference $\Delta n_{end}$ at the end of the alpha profile (i.e. $\Delta n_2 = \Delta n_{end}$). The refractive index difference $\Delta n_2$ is constant over the inner cladding and preferably lies in the range $0.2 \times 10^{-3}$ to $2 \times 10^{-3}$. The width $w_2$ of the inner cladding lies in the range 0.5 $\mu$m to 2 $\mu$m.

The refractive index difference $\Delta n_2$ of the inner cladding and the refractive index difference $\Delta n_3$ of the buried trench are such that:

$$-11.9 \times (1000\Delta n_2)^2 - 3.4 \times (1000\Delta n_2) - 7.2 < 1000\Delta n_3$$

$$\text{and}$$

$$1000\Delta n_3 < -17.2 \times (1000\Delta n_2)^2 + 16.5 \times (1000\Delta n_2) - 8.0$$

In a second embodiment, the refractive index difference $\Delta n_{end}$ at the end of the alpha profile of the central core lies in the range $-1 \times 10^{-3}$ to 0.

In this embodiment, the refractive index difference $\Delta n_2$ of the inner cladding and the refractive index difference $\Delta n_3$ of the buried trench are such that:

$$1000\Delta n_3 < -1.29 \times (1000\Delta n_2)^2 - 1.64 \times 1000\Delta n_2 - 2.51$$

In a third embodiment, the refractive index difference $\Delta n_{end}$ at the end of the alpha profile of the central core lies in the range $-1 \times 10^{-3}$ to 0, the refractive index difference $\Delta n_2$ of the inner cladding lies in the range $-0.6 \times 10^{-3}$ to $2 \times 10^{-3}$, and the width $w_2$ of the inner cladding lies in the range 0.5 $\mu$m to 2 $\mu$m.

The refractive index difference $\Delta n_2$, the width $w_2$ of the inner cladding, and the refractive index difference $\Delta n_3$ of the buried trench are such that:

$$1000\Delta n_3 > A \times (1000\Delta n_2)^2 + B \times (1000\Delta n_2) + C$$

where:

$$\cdot\ A = 182.29 x w_2^3 - 550 x w_2^2 + 545 x w_2 - 177.32;$$

$$\cdot\ B = -135.42 x w_2^3 + 402 x w_2^2 - 399 x w_2 + 130.22;\ \text{and}$$

$$\cdot\ C = 15 x w_2^3 - 57.25 x w_2^2 + 60.9 x w_2 - 25.37;\ \text{and}$$

$$1000\Delta n_3 < Dx(1000\Delta n_2)^2 + Ex(1000\Delta n_2) + F$$

where:

$$\cdot\ D = -83.137 x w_2^3 + 235.06 x w_2^2 - 219.52 x w_2 + 66.66;$$

$$\cdot\ E = 129.56 x w_2^3 - 388.67 x w_2^2 + 378.13 x w_2 - 121.11;\ \text{and}$$

$$\cdot\ F = -48.28 x w_2^3 + 137.84 x w_2^2 - 129.9 x w_2 + 38.97.$$

Thus, the optical fiber in accordance with the present invention, in particular the optical fiber of the first, second, and third embodiments, presents an OFL bandwidth greater than 1500 MHz.km, or greater than 6000 MHz.km, and even greater than 10,000 MHz.km at the wavelength 850 nanometer, while conserving a broad bandwidth at the wavelength 1300 nanometer and low bending losses.

The OFL bandwidth is not the only parameter that can be used for assessing the use of an optical fiber in a broadband application. In order to improve the performance of the optical fiber for a broadband application, it is necessary to limit the cladding effect in the optical fiber at the interface between the central core and the inner cladding.

The dispersion mode delay acquired with a mask covering the outer portion of the central core of the optical fiber, written DMDext (and corresponding to the term "DMD value on the outer mask 0-23 $\mu$m" as defined in the standard FOTP-220) serves to characterize the cladding effect of the optical fiber. DMDext comes from a DMD graph measured using 750 m of fiber. The light source used is a pulsed Ti: Sapphire laser emitting at 850 nanometer. The source emits light pulses having a duration shorter than 40 picoseconds (ps) at quarter-height and a root mean square (rms) spectrum width of less than 0.1 nanometer.

The optical fiber in accordance with the invention, in particular the optical fiber of the first, second, and third embodiments, also presents a DMDext that is improved compared with optical fibers according to the prior art at the wavelength 850 nanometer, while conserving a broad bandwidth at the wavelength 1300 nanometer and low bending losses.

The characteristics of the optical fiber according to the present invention enable DMDext to be decreased compared with an optical fiber according to the prior art. In particular, the fiber of the invention presents a DMDext value of less than 0.33 ps/m at the wavelength 850 nanometer. The fiber may even present a DMDext value of less than 0.25 ps/m at the wavelength 850 nanometer, or less than 0.14 ps/m at the wavelength 850 nanometer.

In an embodiment, the optical fiber is constituted by a central core, the inner cladding, the buried trench, and the outer optical cladding. The inner cladding is directly adjacent to the central core. The buried trench is directly adjacent to the inner cladding, and the outer optical cladding is directly adjacent to the buried trench.

In an embodiment, the optical fiber of the invention is compatible with the ITU-T standard G.651.1. Thus, the optical fiber presents a core diameter of 50 $\mu$m and a numerical aperture of 0.2 $\pm$ 0.015.

The invention also provides a multimode optical system including at least a portion of fiber in accordance with the invention. In particular, the optical fiber may present a bit rate greater than or equal to 10 Gb/s over 100 m. The optical system may also present a rate greater than or equal to 10 Gb/s over 300 m.

The optical fiber in accordance with the invention may advantageously be used to obtain low bending losses and a broad bandwidth at the wavelengths 850 nanometer and 1300 nanometer, using a high volume and low cost fabrication process.

Naturally, the present invention is not limited to the embodiments described by way of example.

In particular, the dopant that increases the refractive index is not necessarily germanium. In a variant, it is possible to select phosphorus.

The optical fiber of the invention may be installed in numerous transmission systems with good compatibility with the other optical fibers of the system.

**Claims**

1. A multimode optical fiber comprising from the center towards the periphery:

   · a central core having a radius $r_1$ and an alpha refractive index profile and having a matrix doped at least by fluorine and by an element that increases refractive index;
   · an inner cladding having a width $w_z$ and a refractive index difference $\Delta n_2$ relative an the outer optical cladding;
   · a buried trench having a radius $r_3$, a width w3 lying in the range 2 $\mu$m to 10 $\mu$m, and a refractive index difference $\Delta n_3$ relative to the outer optical cladding lying in the range $-15 \times 10^{-3}$ to $-6 \times 10^{-3}$; and
   · the outer optical cladding;

   wherein the atomic ratio $C_F$ between the fluorine and all of the constituents of the doped matrix of the central core increases from the center of the fiber to $r_1$; and at $r_1$, the maximum value $C_{F,MAX}$ of the atomic ratio $C_F$ between the fluorine and all of the constituents of the doped matrix of the central core lies in the range $8.5 \times 10^{-3}$ to $57 \times 10^{-3}$.

2. A multimode optical fiber according to claim 1, wherein the dopant increasing the refractive index in the central core is germanium and the matrix of the central core is made of silica.

3. A multimode optical fiber according to claim 2, wherein, at $r_1$, the refractive index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -10.06 \times 1000 \times \Delta n_3 - 82.06$$

4. A multimode optical fiber according to claim 2 or claim 3, wherein, at $r_1$, the refractive Index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -8.28 \times 1000 \times \Delta n_3 - 48.28$$

5. A multimode optical fiber according to claim 2, 3, or 4, wherein, at $r_1$, the refractive Index difference $\Delta n_3$ of the buried trench and the value $C_{F,MAX}$ of the atomic ratio between the fluorine and all of the constituents of the doped matrix of the central core satisfy the following relationship:

$$C_{F,MAX} \times 1000 > -8 \times 1000 \times \Delta n_3 - 42.28$$

6. A multimode optical fiber according to any preceding claim, wherein the atomic ratio $C_F$ between the fluorine and all of the constituents of the doped matrix of the central core as a function of the radial distance $\underline{r}$ from the center of the fiber is given by the following expression:

$$C_F(r) = C_P^{(I)} + \left(\frac{r}{r_1}\right)^P \cdot \left(C_{F,MAX} - C_P^{(I)}\right)$$

where

· $r_1$ is the radius of the central core;

· $\underline{p}$ is a constant substantially equal to 2; and

· $C_F^{(l)}$ is a positive constant less than 1.25x10⁻³.

7. A multimode optical fiber according to any preceding claim, wherein the alpha Index profile of the central core presents a parameter alpha, $\alpha$, having a value lying in the range 1.9 to 2.1.

8. A multimode optical fiber according to any preceding claim, wherein the refractive index difference $\Delta n_1$ of the central core relative to the outer optical cladding presents a maximum value lying in the range 10x10⁻³ to 18x10⁻³, preferably a maximum value lying in the range 11x10⁻³ to 16x10⁻³.

9. A multimode optical fiber according to any preceding claim, wherein the width $w_2$ of the inner cladding lies in the range 0 5 $\mu$m to 2 $\mu$m, and the refractive index difference $\Delta n_2$ of the inner cladding relative to the outer optical cladding lies in the range -0 2x10⁻³ to 2x10⁻³.

10. A multimode optical fiber according to any preceding claim, wherein the width $w_3$ of the buried trench lies in the range 3 $\mu$m to 5 $\mu$m.

11. A multimode optical fiber according to any preceding claim, presenting a numerical aperture lying in the range 0 185 to 0.215.

12. A multimode optical fiber according to any preceding claim, presenting, at the wavelength 850 nanometer, bending losses for two turns with a radius of curvature of 7 5 mm of less than 0.2 dB, preferably less than 0.1 dB, more preferably less than 0 05 dB, even more preferably less than 0 01 dB

13. A multimode optical fiber according to any preceding claim, presenting, at the wavelength 1300 nanometer, bending losses for two turns with a radius of curvature of 7 5 mm of less than 0.5 dB, preferably less than 0.3 dB, more preferably less than 0.2 dB, even more preferably less than 0.1 dB, most preferably less than 0.05 dB.

14. A multimode optical fiber according to any preceding claim, presenting, at the wavelength 850 nanometer, an overfilled launch OFL bandwidth greater than 1500 MHz.km, more preferably greater than 3500 MHz.km and/or presenting, at the wavelength 1300 nanometer, an overfilled launch OFL bandwidth greater than 500 MHz.km, more preferably greater than 600 MHz.km.

15. A multimode optical fiber according to any preceding claim, wherein, at the wavelength 850 nanometer, the dispersion mode delay DMDext as acquired with a mask covering the outer portion of the central core in accordance with the FOTP-220 standard is less than 0.33 ps/m, preferably less than 0.25 ps/m, more preferably less than 0.14 ps/m.

16. A multimode optical system including at least a portion of a multimode optical fiber according to any one of claims 1 to 15, optionally presenting a rate greater than or equal to 10 Gb/s over 100 m, preferably greater than or equal to 10 Gb/s over 300 m.

**Patentansprüche**

1. Multimode-Glasfaser, die vom Mittelpunkt zum Rand folgendes aufweist:

- einen Mittelkern mit einem Radius $r_1$, einem Alpha-Brechungsindex-Profil und einer Matrize, die wenigstens mit Fluor und mit einem Element dotiert ist, das den Brechungsindex erhöht,
- einen Innenmantel mit Weite $w_2$ und einem Brechungsindexunterschied $\Delta n_2$ bezüglich eines äußeren optischen Mantels,
- eine eingegrabene Furche mit einem Radius $r_3$, einer Weite $w_3$, die im Bereich von 2 $\mu$m bis 10 $\mu$m liegt, und einem Brechungsindexunterschied $\Delta n_3$ bezüglich des äußeren optischen Mantels, der im Bereich von -15 x 10⁻³ bis -6 x 10⁻³ liegt, und
- den äußeren optischen Mantel,

wobei sich das atomare Verhältnis $C_F$ zwischen Fluor und allen Bestandteilen der dotierten Matrize des Mittelkerns vom Mittelpunkt der Faser bis zu $r_1$ vergrößert, und bei $r_1$ der maximale Wert $C_{F,MAX}$ des atomaren Verhältnisses $C_F$ zwischen Fluor und allen Bestandteilen der dotierten Matrize des Mittelkerns im Bereich von $8,5 \times 10^{-3}$ bis $57 \times 10^{-3}$ liegt.

2. Multimode-Glasfaser nach Anspruch 1, **dadurch gekennzeichnet, dass** der Dotand, der den Brechungsindex des Mittelkerns erhöht, Germanium ist und die Matrize des Mittelkerns aus Siliziumoxid hergestellt ist.

3. Multimode-Glasfaser nach Anspruch 2, **dadurch gekennzeichnet, dass** bei $r_1$ der Brechungsindexunterschied $\Delta n_3$ der eingegrabenen Furche und der Wert $C_{F,MAX}$ des atomaren Verhältnisses zwischen Fluor und allen Bestandteilen der dotierten Matrize des Mittelkerns die folgende Gleichung erfüllen:

$$C_{F,MAX} \times 1000 > -10,06 \times 1000 \times \Delta n_3 - 82,06.$$

4. Mutlimode-Glasfaser nach Anspruch 2 oder 3, **dadurch gekennzeichnet, dass** bei $r_1$ der Brechungsindexunterschied $\Delta n_3$ der eingegrabenen Furche und der Wert $C_{F,MAX}$ des atomaren Verhältnisses zwischen Fluor und allen Bestandteilen der dotierten Matrize des Mittelkerns die folgende Gleichung erfüllen:

$$C_{F,MAX} \times 1000 > -8,28 \times 1000 \times \Delta n_3 - 48,28.$$

5. Multimode-Glasfaser nach Anspruch 2, 3 oder 4, **dadurch gekennzeichnet, dass** bei $r_1$ der Brechungsindexunterschied $\Delta n_3$ der eingegrabenen Furche und der Wert $C_{F,MAX}$ des atomaren Verhältnisses zwischen Fluor und allen Bestandteilen der dotierten Matrize des Mittelkerns die folgende Gleichung erfüllen:

$$C_{F,MAX} \times 1000 > -8 \times 1000 \times \Delta n_3 - 42,28.$$

6. Multimode-Glasfaser nach einem der vorhergehenden Ansprüche, **dadurch gekennzeichnet, dass** das atomare Verhältnis $C_F$ zwischen Fluor und allen Bestandteilen der dotierten Matrize des Mittelkerns als Funktion der radialen Entfernung $r$ vom Mittelpunkt der Faser durch die folgende Gleichung gegeben ist:

$$C_F(r) = C_F^{(1)} + \left(\frac{r}{r_1}\right)^p \cdot \left(C_{F,MAX} - C_F^{(1)}\right)$$

wobei:

- $r_1$ der Radius des Mittelkerns ist,
- $p$ eine Konstante ist, die im Wesentlichen gleich 2 ist, und

- $C_F^{(1)}$ eine positive Konstante kleiner als $1,25 \times 10^{-3}$ ist.

7. Multimode-Glasfaser nach einem der vorhergehenden Ansprüche, **dadurch gekennzeichnet, dass** das Alpha-Index-Profil des Mittelkerns einen Parameter Alpha, $\alpha$, mit einem Wert aufweist, der im Bereich von 1,9 bis 2,1 liegt.

8. Multimode-Glasfaser nach einem der vorhergehenden Ansprüche, **dadurch gekennzeichnet, dass** der Brechungsindexunterschied $\Delta n_1$ des Mittelkerns bezüglich des äußeren optischen Mantels einen maximalen Wert aufweist, der im Bereich von $10 \times 10^{-3}$ bis $18 \times 10^{-3}$, vorzugsweise im Bereich von $11 \times 10^{-3}$ bis $16 \times 10^{-3}$ liegt.

9. Multimode-Glasfaser nach einem der vorhergehenden Ansprüche, **dadurch gekennzeichnet, dass** die Weite $w_2$ des Innenmantels im Bereich von $0,5\ \mu m$ bis $2\ \mu m$ liegt und der Brechungsindexunterschied $\Delta n_2$ des Innenmantels bezüglich des äußeren optischen Mantels im Bereich von $-0,2 \times 10^{-3}$ bis $2 \times 10^{-3}$ liegt.

10. Multimode-Glasfaser nach einem der vorhergehenden Ansprüche, **dadurch gekennzeichnet, dass** die Weite $w_3$ der eingegrabenen Furche im Bereich von $3\ \mu m$ bis $5\ \mu m$ liegt.

**11.** Multimode-Glasfaser nach einem der vorhergehenden Ansprüche, die eine numerische Apertur im Bereich von 0,185 bis 0,215 aufweist.

**12.** Multimode-Glasfaser nach einem der vorhergehenden Ansprüche, die bei einer Wellenlänge von 850 Nanometern über zwei Windungen mit einem Biegeradius von 7,5 mm Krümmungsverluste von weniger als 0,2 dB, vorzugsweise weniger als 0,1 dB, besonders bevorzugt weniger als 0,05 dB, noch weiter bevorzugt weniger als 0,01 dB aufweist.

**13.** Multimode-Glasfaser nach einem der vorhergehenden Ansprüche, die bei einer Wellenlänge von 1300 Nanometern über zwei Windungen mit einem Biegeradius von 7,5 mm Krümmungsverluste von weniger als 0,5 dB, vorzugsweise weniger als 0,3 dB, besonders bevorzugt weniger als 0,2 dB, noch weiter bevorzugt weniger als 0,1 dB, am weitesten bevorzugt weniger als 0,05 dB aufweist.

**14.** Multimode-Glasfaser nach einem der vorhergehenden Ansprüche, die bei einer Wellenlänge von 850 Nanometern eine Overfilled Launch OFL Bandbreite größer als 1500 MHz.km, besonders bevorzugt größer als 3500 MHz.km aufweist und/oder die bei einer Wellenlänge von 1300 Nanometern eine Overfilled Launch OFL Bandbreite größer als 500 MHz.km, besonders bevorzugt größer als 600 MHz.km aufweist.

**15.** Multimode-Glasfaser nach einem der vorhergehenden Ansprüche, **dadurch gekennzeichnet, dass** die gemäß des FOTP-220 Standards mit einer Maske, die den Außenbereich des Mittelkerns abdeckt, ermittelte dispersionsbedingte Modenverzögerung DMDext bei einer Wellenlänge von 850 Nanometern kleiner als 0,33 ps/m, vorzugsweise kleiner als 0,25 ps/m, besonders bevorzugt kleiner als 0,14 ps/m ist.

**16.** Optisches Multimode-System, das wenigstens einen Teil einer Multimode-Glasfaser gemäß einem der Ansprüche 1 bis 15 aufweist und das optional eine Rate größer oder gleich 10 Gb/s über 100 m, vorzugsweise größer oder gleich 10 Gb/s über 300 m aufweist.

**Revendications**

**1.** Fibre optique multimode comprenant du centre vers la périphérie :

- une âme centrale ayant un rayon $r_1$ et un profil d'indice de réfraction alpha, et ayant une matrice dopée au moins par le fluor et par un élément qui augmente l'indice de réfraction ;
- une gaine interne ayant une largeur $W_z$ et une différence d'indice de réfraction $\Delta n_2$ par rapport à la gaine optique externe ;
- une tranchée enterrée ayant un rayon $r_3$, une largeur $w_3$ se situant dans la plage de 2 $\mu$m à 10 $\mu$m et une différence d'indice de réfraction $\Delta n_3$ par rapport à la gaine optique externe se situant dans la plage de -15 x $10^{-3}$ à -6 x $10^{-3}$; et
- la gaine optique externe ;

dans laquelle le rapport atomique $C_F$ entre le fluor et tous les constituants de la matrice dopée de l'âme centrale augmente du centre de la fibre vers $r_1$; et à $r_1$, la valeur maximale $C_{F,MAx}$ du rapport atomique $C_F$ entre le fluor et tous les constituants de la matrice dopée de l'âme centrale se situe dans la plage de 8,5 x $10^{-3}$ à 57 x $10^{-3}$.

**2.** Fibre optique multimode selon la revendication 1, dans laquelle le dopant augmentant l'indice de réfraction dans l'âme centrale est le germanium et la matrice de l'âme centrale est constituée de silice.

**3.** Fibre optique multimode selon la revendication 2, dans laquelle, à $r_1$, la différence d'indice de réfraction $\Delta n_3$ de la tranchée enterrée et la valeur $C_{F,MAX}$ du rapport atomique entre le fluor et tous les constituants de la matrice dopée de l'âme centrale satisfont la relation suivante :

$$C_{FMAX} \times 1\,000 > -10,06 \times 1\,000 \times \Delta n_3 - 82,06.$$

**4.** Fibre optique multimode selon la revendication 2 ou 3, dans laquelle, à $r_1$, la différence d'indice de réfraction $\Delta n_3$ de la tranchée enterrée et la valeur $C_{F,MAx}$ du rapport atomique entre le fluor et tous les constituants de la matrice dopée de l'âme centrale satisfont la relation suivante :

$$C_{FMAX} \times 1\,000 > -8,28 \times 1\,000 \times \Delta n_3 - 48,28.$$

**5.** Fibre optique multimode selon la revendication 2, 3 ou 4, dans laquelle, à $r_1$, la différence d'indice de réfraction $\Delta n_3$ de la tranchée enterrée et la valeur $C_{F,MAX}$ du rapport atomique entre le fluor et tous les constituants de la matrice dopée de l'âme centrale satisfont la relation suivante :

$$C_{FMAX} \times 1\,000 > -8 \times 1\,000 \times \Delta n_3 - 42,28.$$

**6.** Fibre optique multimode selon l'une quelconque des revendications précédentes, dans laquelle le rapport atomique $C_F$ entre le fluor et tous les constituants de la matrice dopée de l'âme centrale en fonction de la distance radiale <u>r</u> du centre de la fibre est donné par l'expression suivante :

$$C_p(r) = C_p^{(1)} + \left(\frac{r}{r_1}\right)^p \cdot \left(C_{F,MAX} - C_F^{(1)}\right)$$

Où:

- $r_1$ est le rayon de l'âme centrale ;
- <u>p</u> est une constante sensiblement égale à 2 ; et
- $C_F^{(l)}$ est une constante positive inférieure à 1,25 x 10$^{-3}$.

**7.** Fibre optique multimode selon l'une quelconque des revendications précédentes, dans laquelle le profil d'indice alpha de l'âme centrale présente un paramètre alpha, $\alpha$, ayant une valeur se situant dans la plage de 1,9 à 2,1.

**8.** Fibre optique multimode selon l'une quelconque des revendications précédentes, dans laquelle la différence d'indice de réfraction $\Delta n_1$ de l'âme centrale par rapport à la gaine optique externe présente une valeur maximale se situant dans la plage de 10 x 10$^{-3}$ à 18 x 10$^{-3}$, de préférence une valeur maximale se situant dans la plage de 11 x 10$^{-3}$ à 16 x 10$^{-3}$.

**9.** Fibre optique multimode selon l'une quelconque des revendications précédentes, dans laquelle la largeur $w_2$ de la gaine interne se trouve dans la plage de 0,5 $\mu$m à 2 $\mu$m, et la différence d'indice de réfraction $\Delta n_2$ de la gaine interne par rapport à la gaine optique externe se situe dans la plage de -0,2 x 10$^{-3}$ à 2 x 10$^{-3}$.

**10.** Fibre optique multimode selon l'une quelconque des revendications précédentes, dans laquelle la largeur $w_3$ de la tranchée enterrée se situe dans la plage de 3 $\mu$m à 5 $\mu$m.

**11.** Fibre optique multimode selon l'une quelconque des revendications précédentes, présentant une ouverture numérique se trouvant dans la plage de 0,185 à 0,215.

**12.** Fibre optique multimode selon l'une quelconque des revendications précédentes, présentant, à la longueur d'onde de 850 nanomètres, des pertes par courbure pour deux spires avec un rayon de courbure de 7,5 mm de moins de 0,2 dB, de préférence de moins de 0,1 dB, de manière davantage préférée de moins de 0,05 dB, de manière encore davantage préférée de moins de 0,01 dB.

**13.** Fibre optique multimode selon l'une quelconque des revendications précédentes, présentant, à la longueur d'onde de 1 300 nanomètres, des pertes par courbure pour deux spires avec un rayon de courbure de 7,5 mm de moins de 0,5 dB, de préférence de moins de 0,3 dB, de manière davantage préférée de moins de 0,2 dB, de manière encore davantage préférée de moins de 0,1 dB, de manière préférée entre toutes de moins de 0,05 dB.

**14.** Fibre optique multimode selon l'une quelconque des revendications précédentes, présentant, à la longueur d'onde de 850 nanomètres, une largeur de bande en trop-plein OFL supérieure à 1 500 MHz.km, de manière davantage préférée supérieure à 3 500 MHz.km et/ou présentant, à la longueur de 1 300 nanomètres, une largeur de bande de lancement en trop-plein OFL supérieure à 500 MHz.km, de manière davantage préférée supérieure à 600 MHz.km.

**15.** Fibre optique multimode selon l'une quelconque des revendications précédentes, dans laquelle, à la longueur d'onde de 850 nanomètres, le délai de mode de dispersion DMDext tel qu'acquis avec un masque couvrant la portion externe de l'âme centrale en conformité avec la norme FOTP-220 est inférieur à 0,33 ps/m, de préférence inférieur à 0,25 ps/m, de manière davantage préférée inférieur à 0,14 ps/m.

**16.** Système optique multimode comprenant au moins une portion d'une fibre optique multimode selon l'une quelconque des revendications 1 à 15, présentant facultativement un débit supérieur ou égal à 10 Gb/s sur 100 m, de préférence supérieur ou égal à 10 Gb/s sur 300 m.

# Fig.1

# Fig.2

**Fig.3**

PRIOR ART

**Fig.4**

PRIOR ART

Fig.5

Fig.6

Fig.7A

Fig.7B

EP 2 482 107 B1

Fig.8

Fig.9

25

Fig.10

Fig.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1498753 A1
- EP 1498753 A
- EP 1503230 A1
- US 7315677 B1
- EP 1503230 A
- US 7315677 B
- WO 2009054715 A1
- WO 2009054715 A

**Non-patent literature cited in the description**

- **D. GLOGE et al.** Multimode theory of graded-core fibers. *Bell System Technical Journal,* 1973, 1563-1578
- **G. YABRE.** Comprehensive theory of dispersion in graded-index optical fibers. *Journal of Lightwave Technology,* February 2000, vol. 18 (2), 166-177